Europäisches Patentamt

European Patent Office

Office européen des brevets

(19)

(11) **EP 1 104 213 A2**

(12) **EUROPÄISCHE PATENTANMELDUNG**

(43) Veröffentlichungstag:
30.05.2001 Patentblatt 2001/22

(51) Int Cl.⁷: **H04Q 7/38**

(21) Anmeldenummer: 00204148.1

(22) Anmeldetag: 21.11.2000

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: 29.11.1999 DE 19957387
02.12.1999 DE 19958004
19.01.2000 DE 10002183
21.01.2000 DE 10002636
28.03.2000 DE 10015389

(71) Anmelder:
• **Philips Corporate Intellectual Property GmbH
52064 Aachen (DE)**
Benannte Vertragsstaaten:
**DE**
• **Koninklijke Philips Electronics N.V.
5621 BA Eindhoven (NL)**
Benannte Vertragsstaaten:
**FR GB IT**

(72) Erfinder:
• **Hermann, Christoph Dr.
52064 Aachen (DE)**
• **Wasel, Josef Dr.
52064 Aachen (DE)**

(74) Vertreter: **Volmer, Georg, Dipl.-Ing. et al
Philips Corporate Intellectual Property GmbH,
Habsburgerallee 11
52064 Aachen (DE)**

(54) **Drahtloses Netzwerk mit einer Prozedur zur Schlüsseländerung**

(57) Die Erfindung bezieht sich auf ein drahtloses Netzwerk mit einer Funknetzwerk-Steuerung und mehreren zugeordneten Terminals, die zur Verschlüsselung bestimmter zu übertragener Daten über Nutz- und Steuerkanäle und die zur Veränderung des für die Verschlüsselung notwendigen jeweiligen Schlüssels zu bestimmten Zeitpunkten vorgesehen sind. Die Funknetzwerk-Steuerung sendet eine mit einem alten Schlüssel verschlüsselten Meldung über eine Änderung des Schlüssels an ein Terminal. Das Terminal antwortet mit einer mit einem neuen Schlüssel verschlüsselten Meldung als Bestätigung für den neuen Schlüssel.

FIG. 3

**Beschreibung**

Die Erfindung bezieht sich auf ein drahtloses Netzwerk mit einer Funknetzwerk-Steuerung und mehreren zugeordneten Terminals, die zur Verschlüsselung bestimmter zu übertragener Daten vorgesehen sind und die zur Veränderung des für die Verschlüsselung notwendigen jeweiligen Schlüssels zu bestimmten Zeitpunkten vorgesehen sind.

Aus dem Buch "The GSM System for Mobile Communications" von Michel Mouly und Marie-Bernadette Pautet, Verlag Cell & Sys, 1992, Seiten 391 bis 395, ist bekannt, dass Daten zwischen einer Funknetzwerk-Steuerung und einem Terminal verschlüsselt übertragen werden. Der für die Übertragung benötigte Schlüssel wird in bestimmten Zeitabständen verändert. Hierfür ist eine Prozedur in drei Schritten vorgesehen.

Der Erfindung liegt die Aufgabe zugrunde, ein drahtloses Netzwerk zu schaffen, das eine andere Prozedur zur Änderung eines Schlüssels angibt.

Die Aufgabe wird durch ein drahtloses Netzwerk der eingangs genannten Art dadurch gelöst,

dass die Funknetzwerk-Steuerung zur Sendung eines mit einem alten Schlüssel verschlüsselten Meldung über eine Änderung des Schlüssels an ein Terminal vorgesehen ist und

dass das Terminal zur Sendung eines mit einem neuen Schlüssel verschlüsselten Meldung als Bestätigung für den neuen Schlüssel an die Funknetzwerk-Steuerung vorgesehen ist.

Unter dem erfindungsgemäßen drahtlosen Netzwerk ist ein Netzwerk mit mehreren Funkzellen zu verstehen, in denen jeweils eine Funknetzwerk-Steuerung und mehrere Terminals Steuer- und Nutzdaten drahtlos übertragen. Eine drahtlose Übertragung dient zur Übertragung von Informationen z.B. über Funk-, Ultraschall- oder Infrarotwege.

Erfindungsgemäß bestätigt ein Terminal einen mit einem neuen Schlüssel verschlüsselten Meldung über eine Änderung des Schlüssels (z.B. Schlüsseländerungsbefehl) mit der Sendung eines mit dem neuen Schlüssel verschlüsselten Meldung (z.B. Schlüsselbestätigungsbefehl). Wenn dem Terminal der neue Schlüssel fehlerhaft bekannt gemacht worden ist, kann kein Schlüsselbestätigungsbefehl detektiert werden. Somit kann der neue Schlüssel nicht verwendet werden.

Ausführungsbeispiele der Erfindung werden nachstehend anhand der Fig. näher erläutert. Es zeigen:

Fig. 1 ein drahtloses Netzwerk mit einer Funknetzwerk-Steuerung und mehreren Terminals,

Fig. 2 ein Schichtenmodell zur Erläuterung verschiedener Funktionen eines Terminals oder einer Funknetzwerk-Steuerung,

Fig. 3 ein Blockschaltbild zur Erläuterung des Verschlüsselungsmechanismus in einem Terminal oder einer Funknetzwerk-Steuerung und

Fig. 4 bis 14 Abläufe verschiedener Befehle bei einer Änderungsprozedur des für die Verschlüsselung benötigten Schlüssels.

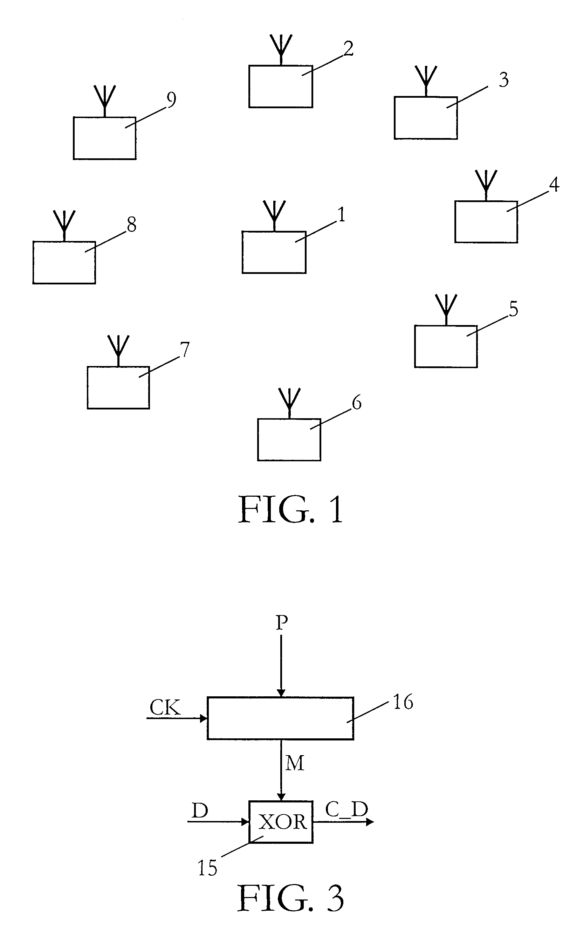

In Fig. 1 ist ein drahtloses Netzwerk, z.B. Funknetzwerk, mit einer Funknetzwerk-Steuerung (Radio Network Controller = RNC) 1 und mehreren Terminals 2 bis 9 dargestellt. Die Funknetzwerk-Steuerung 1 ist für Steuerung aller am Funkverkehr beteiligten Komponenten verantwortlich, wie z.B. der Terminals 2 bis 9. Ein Steuer- und Nutzdatenaustausch findet zumindest zwischen der Funknetzwerk-Steuerung 1 und den Terminals 2 bis 9 statt. Die Funknetzwerk-Steuerung 1 baut jeweils eine Verbindung zur Übertragung von Nutzdaten auf.

In der Regel sind die Terminals 2 bis 9 Mobilstationen und die Funknetzwerk-Steuerung 1 ist fest installiert. Eine Funknetzwerk-Steuerung 1 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_c$ bezeichnet. $1/T_c$ ist die Chiprate. Die Multiplikation bzw. Modulation des Datensignals mit dem pseudo-zufälligen Rechtecksignal hat eine Spreizung des Spektrums um den Spreizungsfaktor $N_c = T/T_c$ zur Folge, wobei T die Dauer eines Rechteckimpulses des Datensignals ist.

Nutzdaten und Steuerdaten zwischen wenigstens einem Terminal (2 bis 9) und der Funknetzwerk-Steuerung 1 werden über von der Funknetzwerk-Steuerung 1 vorgegebene Kanäle übertragen. Ein Kanal ist durch einen Frequenzbereich, einen Zeitbereich und z. B. beim CDMA-Verfahren durch einen Spreizungscode bestimmt. Die Funkverbindung von der Funknetzwerk-Steuerung 1 zu den Terminals 2 bis 9 wird als Downlink und von den Terminals zur Funknetzwerk-Steuerung als Uplink bezeichnet. Somit werden über Downlink-Kanäle Daten von der Funknetzwerk-Steuerung zu den Terminals und über Uplink-Kanäle Daten von Terminals zur Funknetzwerk-Steuerung gesendet.

Beispielsweise kann ein Downlink-Steuerkanal vorgesehen sein, der benutzt wird, um von der Funknetzwerk-Steuerung 1 Steuerdaten vor einem Verbindungsaufbau an alle Terminals 2 bis 9 zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal 2 bis 9 zur Funknetzwerk-Steuerung 1 kann beispielsweise ein von der Funknetzwerk-Steuerung 1 zugewiesener Uplink-Steuerkanal verwendet werden, auf den aber auch andere Terminals 2 bis 9 zugreifen können. Ein Uplink-Kanal, der von mehreren oder allen Terminals 2 bis 9 benutzt werden kann, wird als gemeinsamer Uplink-Kanal (common uplink channel) bezeichnet. Nach einem Verbindungsaufbau z.B. zwischen einem Terminal 2 bis 9 und der Funknetzwerk-Steuerung 1 werden Nutzdaten über einen Downlink- und ein Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Zur Einbindung eines Terminals 2 bis 9 zu einer Funknetzwerk-Steuerung 1 ist ein kollisionsbehafteter Kanal zuständig, der im folgenden als signalisierter RACH-Kanal (RACH = Random Access Channel) bezeichnet wird. Über einen solchen signalisierten RACH-Kanal können auch Datenpakete übertragen werden.

Damit Nutzdaten zwischen der Funknetzwerk-Steuerung 1 und einem Terminal ausgetauscht werden können, ist es erforderlich, dass ein Terminal 2 bis 9 mit der Funknetzwerk-Steuerung 1 synchronisiert wird. Beispielsweise ist aus dem GSM-System (GSM = Global System for Mobile communication) bekannt, in welchem eine Kombination aus FDMA- und TDMA-Verfahren benutzt wird, dass nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Funknetzwerk-Steuerung bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden. Aus Vereinfachungsgründen wird im folgenden von einem Rahmen ausgegangen, der als Referenzrahmen bezeichnet wird.

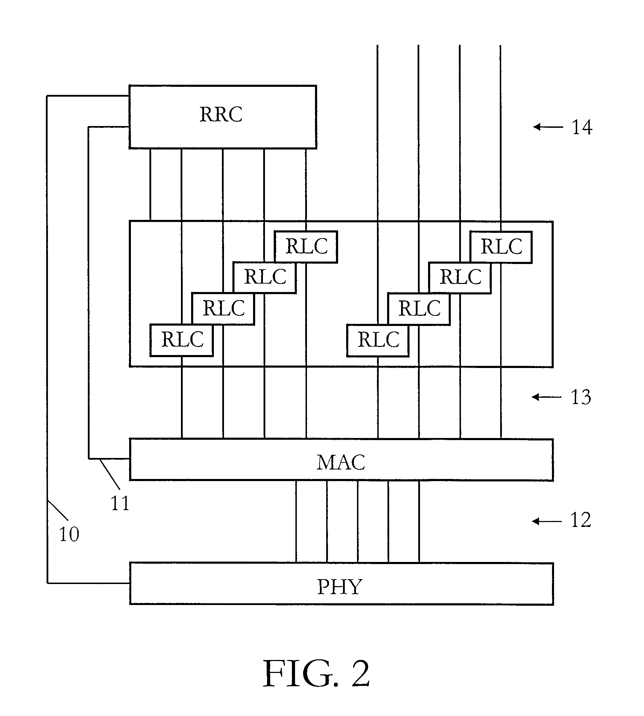

Die Steuer- und Nutzdatenaustausch über die Funkschnittstelle zwischen der Funknetzwerk-Steuerung 1 und den Terminals 2 bis 9 kann mit dem in Fig. 2 dargestellten, beispielhaften Schichtenmodell oder Protokollarchitektur (vgl. z.B. 3rd Generation Partnership Project (3GPP); Technical Specification Group (TSG) RAN; Working Group 2 (WG2); Radio Interface Protocol Architecture; TS 25.301 V3.2.0 (1999-10)) erläutert werden. Das Schichtenmodell besteht aus drei Protokollschichten: der physikalischen Schicht PHY, der Datenverbindungsschicht mit den Unterschichten MAC und RLC (in Fig. 2 sind mehrere Ausprägungen der Unterschicht RLC dargestellt) und der Schicht RRC. Die Unterschicht MAC ist für die Medienzugriffssteuerung (Medium Access Control), die Unterschicht RLC für die Funkverbindungssteuerung (Radio Link Control) und die Schicht RRC für die Funkverwaltungssteuerung (Radio Resource Control) zuständig. Die Schicht RRC ist für die Signalisierung zwischen den Terminals 2 bis 9 und der Funknetzwerk-Steuerung 1 verantwortlich. Die Unterschicht RLC dient zur Steuerung einer Funkverbindung zwischen einem Terminal 2 bis 9 und der Funknetzwerk-Steuerung 1. Die Schicht RRC steuert die Schichten MAC und PHY über Steuerungsverbindungen 10 und 11. Hiermit kann die Schicht RRC die Konfiguration der Schichten MAC und PHY steuern. Die physikalische Schicht PHY bietet der MAC-Schicht Transportverbindungen 12 an. Die MAC-Schicht stellt der RLC-Schicht logische Verbindungen 13 zur Verfügung. Die RLC-Schicht ist über Zugangspunkte 14 von Applikationen erreichbar.

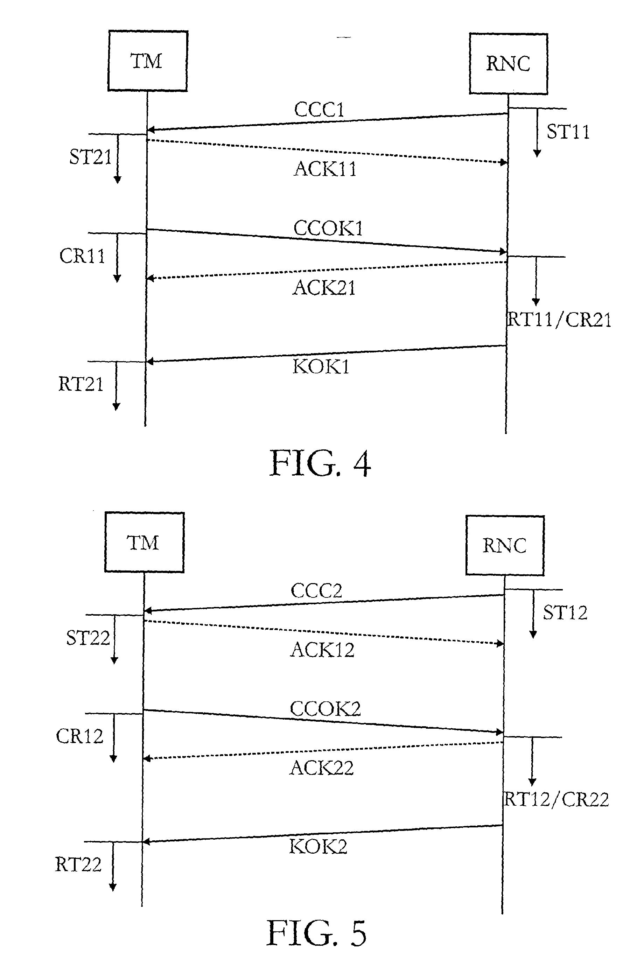

Bei einem solchen drahtlosen Netzwerk werden die Daten aus Sicherheits- und Vertraulichkeitsgründen verschlüsselt über die Funkschnittstelle übertragen, um eine Abhören der Daten zu verhindern. Die Verschlüsselung wird in der Datenverbindungsschicht (z. B. in der RLC- oder MAC-Schicht) durchgeführt. Wie Fig. 3 zeigt, werden die Daten D über eine Exklusiv-Oder-Funktion (XOR) mit einer Verschlüsselungsmaske M verknüpft, so dass sich ein verschlüsselter Datenstrom C_D ergibt. Die Verschlüsselungsmaske M wird in einer Verschlüsselungs-Funktion 16 gebildet, die nach einem Verschlüsselungs-Algorithmus arbeitet und als Eingangswerte den Schlüssel CK und andere hier nicht näher dargestellte Parameter P erhält.

Der Schlüssel muss sowohl der Funknetzwerk-Steuerung 1 als auch den Terminals 2 bis 9 bekannt sein. Dieser Schlüssel wird zu bestimmten Zeitpunkten geändert (z.B. alle 2 Stunden) mit einer speziellen Prozedur, die als Schlüsseländerungs-Prozedur (cipher key change) bezeichnet wird.

Im folgenden werden fünf unterschiedliche Schlüsseländerungs-Prozeduren CKC1 bis CKC5 dargestellt. Mit Hilfe der Fig. 4 wird die erste Prozedur CKC1 erläutert. Bei dieser ersten Prozedur wird - im Gegensatz zu den vier anderen Prozeduren CKC2 bis CKC5 - der neue Schlüssel mitübertragen. Zuerst wird von der Funknetzwerk-Steuerung 1 (in Fig. 4 mit RNC bezeichnet) jede Übertragung von Daten zu dem Terminal (Downlink), welche verschlüsselt werden sollen, gestoppt (ST11). Die einzige Ausnahme ist ein im folgenden beschriebener Schlüsseländerungsbefehl CCC1. Empfangene Uplink-Daten werden weiterhin mit dem bisherigen Schlüssel demaskiert. Dann wird von der Funknetzwerk-Steuerung 1 (RNC) dem Terminal (in Fig. 4 mit TM bezeichnet) der Schlüsseländerungsbefehl CCC1 mit einem neuen Schlüssel über einen Signalisierungskanal gesendet (verschlüsselt mit dem alten Schlüssel). Aus Sicherheitsgründen ist es unerheblich, ob Daten, die vor der Prozedur CKC1 mit dem alten Schlüssel verschlüsselt übertragen wurden, aber unquittiert (keine Bestätigung) blieben, nach der Prozedur CKC1 bei erneuter Übertragung nun mit dem neuen Schlüssel verschlüsselt werden.

Nachdem das Terminal den Schlüsseländerungsbefehl CCC1 mit dem neuen Schlüssel erhalten hat, wird nur ein Bestätigungsbefehl ACK11 zur Funknetzwerk-Steuerung 1 gesendet, damit die Funknetzwerk-Steuerung 1 nicht nach einer bestimmten Zeit den Schlüsseländerungsbefehl CCC1 mit dem neuen Schlüssel erneut sendet. Jede Übertragung von Daten (Uplink), welche verschlüsselt werden sollen, werden von dem Terminal ebenfalls gestoppt (ST21). Die einzige Ausnahme ist ein im folgenden beschriebener Schlüsselbestätigungsbefehl CCOK1, der mit dem alten Schlüssel verschlüsselt wird. Nachdem das betreffende Terminal den Schlüssel aus dem Schlüsseländerungsbefehl CCC1 entnommen hat, wird der von dem Terminal aus dem Schlüsseländerungsbefehl CCC1 entnommene Schlüssel als neuer Schlüssel registriert und mit einem Schlüsselbestätigungsbefehl CCOK1 zur Funknetzwerk-Steuerung 1 gesendet. Das Terminal ist nach Sendung des Schlüsselbestätigungsbefehl CCOK1 bereit, Daten sowohl mit dem alten als auch mit dem neuen Schlüssel zu empfangen und zu entschlüsseln. Der alte Schlüssel wird nur dann benötigt, wenn ein erneuter Schlüsseländerungsbefehl CCC1 empfangen wird, der mit dem alten Schlüssel verschlüsselt worden ist. Dieses geschieht, wenn der in dem Schlüsselbestätigungsbefehl CCOK1 enthaltene Schlüssel von dem ursprünglich gesendeten z.B. infolge eines Übertragungsfehlers abweicht.

Der Empfang des Schlüsselbestätigungsbefehls CCOK1 wird von der Funknetzwerk-Steuerung 1 mit einem Bestätigungsbefehl ACK21 dem Terminal gemeldet und die Datenübertragung (Downlink) zum Terminal mit dem neuen Schlüssel wieder aufgenommen. Diese Wiederaufnahme erfolgt nur dann, wenn der ursprünglich gesendete Schlüssel (ST11) mit dem in Schlüsselbestätigungsbefehl CCOK1 enthaltenen Schlüssel übereinstimmt (RT11). Empfangene Daten werden dann auch mit dem neuen Schlüssel demaskiert (CR21). Die Funknetzwerk-Steuerung 1 sendet dann einen Übereinstimmungsbefehl KOK1 zum Terminal. Wie oben erwähnt, muss die Sendung des Schlüsseländerungsbefehl CCC1 wiederholt werden, wenn die Schlüssel unterschiedlich sind. Nach Empfang dieses Übereinstimmungsbefehls KOK1 oder von Daten (Downlink), die mit dem neuen Schlüssel verschlüsselt worden sind, nimmt das Terminal die Datenübertragung (Uplink) mit dem neuen Schlüssel auf (RT21). Hiermit ist die Prozedur CKC1 abgeschlossen und somit wird die Datenübertragung nur mit diesem Schlüssel durchgeführt.

Dadurch, dass das Terminal zwischen CR11 und RT21 empfangene Daten sowohl mit dem alten als auch mit dem neuen Schlüssel entschlüsselt, kann das Terminal erkennen, ob die Prozedur CKC1 erfolgreich abgeschlossen wurde (dann empfängt das Terminal den Übereinstimmungsbefehl KOK1 verschlüsselt mit dem alten Schlüssel) oder ob die Prozedur erneut begonnen werden muss (dann empfängt das Terminal den Schlüsseländerungsbefehl CCC1, der z.B. einen wiederum neuen Schlüssel enthält). Dadurch wird vermieden, dass infolge eines vom Terminal fehlerhaft empfangenen Schlüssels alle Verbindungen zwischen Terminal und Netzwerk abbrechen.

Die beschriebene Prozedur CKC1 bezieht sich zunächst nur auf die Signalisierungsverbindung. Datenverbindungen, die ebenfalls mit Übertragungswiederholungen arbeiten, werden in die Prozedur einbezogen, indem ihren jeweiligen Schichten RLC ebenfalls ein Stoppbefehl (Terminal: ST21, Netzwerk ST11) bzw. ein Befehl zur Wiederaufnahme der Übertragung von Nutzdaten mitgeteilt wird (Terminal: RT21, Netzwerk: RT11/CR21).

Die zweite Schlüsseländerungs-Prozedur CKC2 wird anhand der Fig. 5 erläutert. Bei dieser Prozedur CKC2 erhält das Terminal (TM) die Information über den neuen Schlüssel in einer separaten hier nicht näher dargestellten Datenaustauschprozedur.

Es wird dabei vermieden, dass der Schlüssel selbst über die Funkschnittstelle übertragen wird. Mit dieser Prozedur CKC2 wird dann ein synchronisiertes Umschalten vom alten auf den neuen Schlüssel zwischen Terminal und Funknetzwerk-Steuerung 1 (RNS) durchgeführt. Zuerst wird von der Funknetzwerk-Steuerung 1 jede Übertragung von Daten zu dem Terminal (Downlink), welche verschlüsselt werden sollen, gestoppt (ST12). Die einzige Ausnahme ist ein im folgenden beschriebener Schlüsseländerungsbefehl CCC2. Empfangene Uplink-Daten werden weiterhin mit dem bisherigen Schlüssel entschlüsselt. Dann wird von der Funknetzwerk-Steuerung 1 dem Terminal der Schlüsseländerungsbefehl CCC2 (verschlüsselt mit dem alten Schlüssel) über einen Signalisierungskanal gesendet. Aus Sicherheitsgründen ist es unerheblich, ob Daten, die vor der Prozedur CKC2 mit dem alten Schlüssel verschlüsselt übertragen wurden, aber unquittiert (keine Bestätigung) blieben, nach der Prozedur CKC2 bei erneuter Übertragung nun mit dem neuen Schlüssel verschlüsselt werden.

Nachdem das Terminal den Schlüsseländerungsbefehl CCC2 erhalten hat, wird nur ein Bestätigungsbefehl ACK12 zur Funknetzwerk-Steuerung 1 gesendet, damit die Funknetzwerk-Steuerung 1 nicht nach einer bestimmten Zeit den Schlüsseländerungsbefehl CCC2 erneut sendet. Jede Übertragung von Daten (Uplink), welche verschlüsselt werden sollen, wird von dem Terminal ebenfalls gestoppt (ST22). Die einzige Ausnahme ist ein im folgenden beschriebener Schlüsselbestätigungsbefehl CCOK2, der mit dem neuen Schlüssel verschlüsselt wird. Das Terminal ist nach Sendung des Schlüsselbestätigungsbefehls CCOK2 bereit, Daten sowohl mit dem alten als auch mit dem neuen Schlüssel zu empfangen und zu entschlüsseln (CR12). Die Funknetzwerk-Steuerung 1 ist nach dem Absenden des Schlüsseländerungsbefehls CCC2 und dem Empfang der Bestätigungsnachricht ACK12 bereit. Daten sowohl mit dem neuen als auch mit dem alten Schlüssel zu entschlüsseln. Nach Empfang von ACK12 erwartet die Funknetzwerk-Steuerung 1 nur den Schlüsselbestätigungsbefehl CCOK2, der mit dem neuen Schlüssel verschlüsselt wurde. Ergibt die Entschlüsselung dieses Befehls in der Funknetzwerk-Steuerung 1 keinen sinnvollen Inhalt (d.h. die Funknetzwerk-Steuerung kann nicht zweifelsfrei erkennen, dass es sich um den Befehl CCOK2 handelt), weil das Terminal einen fehlerhaften neuen Schlüssel für die Verschlüsselung verwendet hat, kann die Funknetzwerk-Steuerung 1 erkennen, dass dem Terminal ein fehlerhafter neuer Schlüssel bekannt gemacht wurde.

Die Entschlüsselung dieses Befehls CCOK2 mit dem alten Schlüssel ergibt ebenfalls keinen sinnvollen Inhalt. Durch dieses zweite fehlerhafte Verschlüsselungsergebnis gewinnt die Funknetzwerk-Steuerung noch zusätzliche Gewissheit, dass dem Terminal ein fehlerhafter neuer Schlüssel bekannt ist.

Der Empfang des Schlüsselbestätigungsbefehls CCOK2 wird von der Funknetzwerk-Steuerung 1 mit einem Bestätigungsbefehl ACK22 dem Terminal gemeldet. Ergab die Entschlüsselung von CCOK2 mit dem neuen Schlüssel, dass CCOK2 empfangen wurde, so nimmt die Funknetzwerk-Steuerung 1 die Datenübertragung (Downlink) zum Terminal mit dem neuen Schlüssel wieder auf (RT12). Empfangene Daten werden nur noch mit dem neuen Schlüssel demaskiert. Die Funknetzwerk-Steuerung 1 sendet dann einen Übereinstimmungsbefehl KOK2 zum Terminal, der mit dem neuen Schlüssel verschlüsselt ist.

Konnte kein Schlüsselbestätigungsbefehl CCOK2 entschlüsselt werden (wie oben beschrieben), wird wieder nur noch der alte Schlüssel sowohl zum Empfang als auch zum Senden verwendet (RT12/CR22). Die Funknetzwerk-Steuerung 1 sendet dann einen Übereinstimmungsbefehl KOK2 zum Terminal, der mit dem alten Schlüssel verschlüsselt ist. Danach nimmt die Funknetzwerk-Steuerung 1 wieder das Senden von anderer Daten, falls vorhanden, auf.

Damit ein Schlüsselwechsel mit einem Terminal und Funknetzwerk-Steuerung bekannten neuen Schlüssel noch möglich wird, muss die RLC-Schicht eine hier nicht näher beschriebene, für die Datenaustauschprozedur verantwortliche Management-Schicht informieren, dass ein anderer neuer Schlüssel dem Terminal mitgeteilt werden muss.

Nach Empfang dieses Übereinstimmungsbefehls KOK2, der mit dem neuen Schlüssel verschlüsselt wurde, nimmt das Terminal die Datenübertragung (Uplink) mit dem neuen Schlüssel auf (RT22). Hiermit ist die Prozedur CKC2 abgeschlossen und somit wird die Datenübertragung nur mit diesem Schlüssel durchgeführt.

Nach Empfang dieses Übereinstimmungsbefehls KOK2, der mit dem alten Schlüssel verschlüsselt wurde, nimmt das Terminal die Datenübertragung (Uplink) mit dem alten Schlüssel wieder auf (RT22) und der gleichzeitige Empfang mit dem neuen Schlüssel wird beendet. Hiermit ist die Prozedur CKC2 abgebrochen und somit auch beendet.

Dadurch, dass das Terminal zwischen CR12 und RT22 empfangene Daten sowohl mit dem alten als auch mit dem neuen Schlüssel entschlüsselt, kann das Terminal erkennen, ob die Prozedur CKC2 erfolgreich abgeschlossen wurde (dann empfängt das Terminal den Übereinstimmungsbefehl KOK2 verschlüsselt mit dem neuen Schlüssel und die Entschlüsselung mit dem neuen Schlüssel ergibt, dass KOK2 geschickt wurde, während die Entschlüsselung mit dem alten Schlüssel keinen sinnvollen Inhalt ergibt) oder ob die Prozedur nach dem Austausch eines neuen Schlüssels erneut begonnen werden muss (dann empfängt das Terminal den mit dem alten Schlüssel verschlüsselten Übereinstimmungsbefehl KOK2: hier ergibt die Entschlüsselung mit dem neuen Schlüssel keinen sinnvollen Inhalt, während die Entschlüsselung mit dem alten Schlüssel ergibt, dass KOK2 geschickt wurde). Dadurch wird vermieden, dass infolge eines vom Terminal fehlerhaft empfangenen Schlüssels alle Verbindungen zwischen Terminal und Netzwerk abbrechen.

Die beschriebene Prozedur CKC2 bezieht sich zunächst nur auf die Signalisierungsverbindung. Datenverbindungen, die ebenfalls mit Übertragungswiederholungen arbeiten, werden in die Prozedur einbezogen, indem ihren jeweiligen Schichten RLC ebenfalls ein Stoppbefehl (Terminal: ST22, Netzwerk ST12) bzw. ein Befehl zur Wiederaufnahme der Übertragung von Nutzdaten mitgeteilt wird (Terminal: RT22, Netzwerk: RT12/CR22).

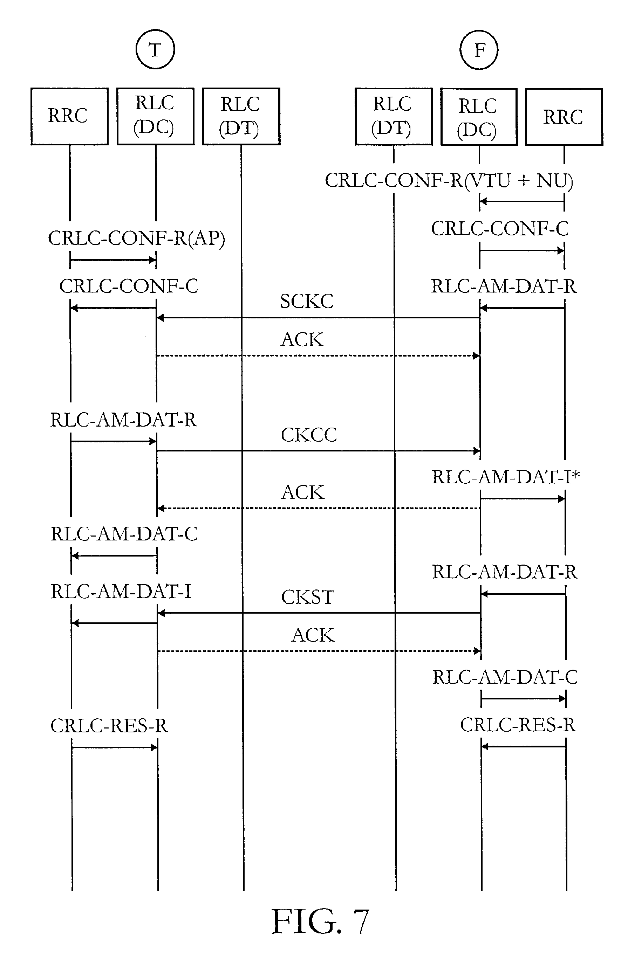

Die dritte Schlüsseländerungs-Prozedur CKC3 wird anhand der Fig. 6 bis 8 erläutert, bei der Meldungen zwischen den Schichten RLC und RRC übertragen werden. In der Schicht RLC werden außerdem noch Meldungen zwischen eigenen Instanzen RLC(DC) und RLC(DT) ausgetauscht. Die Instanz RLC(DT) ist für die Steuerung von dedizierten Nutzkanälen (dedicated traffic channel = DTCH) und die Instanz RLC(DC) für die Steuerung von dedizierten Steuerungskanälen (dedicated control channel = DCCH) zuständig.

Mit der Prozedur CKC3 wird von der Funknetzwerk-Steuerung 1 den Terminals 2 bis 9 die Gültigkeit eines neuen Schlüssels mitgeteilt. Dieser neue Schlüssel ist sowohl der Funknetzwerk-Steuerung 1 als auch den Terminals 2 bis 9 bekannt. Die Fig. 6 bis 8 zeigen verschiedene Meldungen, die zwischen den Schichten RRC und RLC eines Terminals (linke Seite einer Fig. 6 bis 8, mit "T" angegeben) und der Funknetzwerk-Steuerung 1 (rechte Seite einer Fig. 6 bis 8, mit "F" angegeben) gesendet werden. Die im folgende zu beschreibende Fig. 6 stellt den Prolog der Schlüsseländerungs-Prozedur CKC3 dar. Diese Prozedur CKC3 wird durch die lokale Meldung CRLC-S-R(ND) von der Schicht RRC der Seite F angestoßen. Mit dieser lokalen Meldung wird der Instanz RLC(DC) mitgeteilt, dass die Übertragung von Dateneinheiten in Meldungen angehalten werden soll, sofern eine Folgenummer SN einer Dateneinheit (Jede Dateneinheit wird mit einer Folgenummer markiert) die Bedingung SN $\geq$ VTD + ND erfüllt. Dabei bedeutet der Parameter ND der lokalen Meldung CRLC-S-R(ND) eine Anzahl von noch zu übertragenden Dateneinheiten, und VTD ist die in RLC(DC) bekannte Folgenummer der nächsten erstmals zu sendenden Dateneinheit. Mit der lokalen Meldung CRLC-S-C(VTD) bestätigt die Instanz RLC(DC) der Seite F den Empfang der Folgenummer ND und gibt der Schicht die Nummer VTD bekannt. Anschließend teilt die Schicht RRC der Seite F der Instanz RLC(DC) über die lokale Meldung CRLC-CONF-R(CKN) den neuen zu verwendenden Schlüssel CKN mit. Diese Meldung wird von RLC(DC) der Seite F mit der lokalen Meldung CRLC-CONF-C bestätigt.

Nachdem die Schicht RRC der Instanz RLC(DC) die lokale Meldung RLC-AM-DAT-R geliefert hat, sendet die Instanz RLC(DC) der Seite F die Meldung SEC-MO-COM (VTD, ND) an die Instanz RLC(DC) der Seite T (Terminal). Diese Meldung stellt einen Befehl im Sicherheitsmode (security mode command) dar und wird mit dem alten, bisher gültigen Schlüssel verschlüsselt. In der Meldung ist eine Dateneinheit mit den Nummern VTD und ND enthalten. Nach Empfang dieser Meldung zeigt die Instanz RLC(DC) der Schicht RRC der Seite T über die lokale Meldung RLC-AM-DAT-I an, dass die Meldung mit der Angabe angekommen ist, ab wann der neue Schlüssel gelten soll. Dieser neue Schlüssel gilt für das Entschlüsseln nämlich nach der Folgenummer VTD + ND einer Dateneinheit. Der Empfang der Meldung SEC-MO-COM(VTD, ND) in der Instanz RLC(DC) der Seite T wird über einen Befehl ACK der Instanz RLC(DC) der Seite F und weiter der Schicht RRC über die lokale Meldung RLC-AM-DAT-C bestätigt. Damit ist der Funknetzwerk-Steuerung 1 bekannt, dass das Terminal über den Beginn der Schlüsseländerungsprozedur informiert ist und den neuen Schlüssel zur Entschlüsselung von Dateneinheiten verwendet, deren Folgenummer SN die Bedingung SN $\geq$ VTD + ND erfüllt.

Von der Seite T (Terminal) ausgehend wird ein ähnlicher Meldungaustausch zwischen den betroffenen Schichten durchgeführt. Eine lokale Meldung CRLC-S-R(NU) von der Schicht RRC der Seite T startet den von der Seite T ausgehenden Meldungsaustausch. Mit dieser Meldung wird die Übertragung von Dateneinheiten angehalten, deren Folgenummer SN die Bedingung SN $\geq$ VTU + NU erfüllt. Der Instanz RLC(DC) wird die Anzahl NU von noch zu übertragenen Dateneinheiten mitgeteilt. Mit der lokalen Meldung CRLC-S-C(VTU) bestätigt die Instanz RLC(DC) der Seite T den Empfang der Nummer NU und gibt der Schicht die Nummer VTU an. Diese Nummer VTU gibt die Folgenummer SN der Dateneinheit an, die nach Empfang der lokalen Meldung CRLC-S-C (VTU) erstmals (im Uplink) gesendet wird (also keine wiederholte Übertragung). Anschließend teilt die Schicht RRC der Seite T der Instanz RLC(DC) einen Schlüsseländerungs-Wunsch über die lokale Meldung CRLC-CONF-R(CKN) mit. Diese Meldung wird von RLC(DC) der Seite T mit der lokalen Meldung CRLC-CONF-C bestätigt.

Mit der lokalen Meldung RLC-AM-DAT-R von der Schicht RRC der Seite T an die Instanz RLC(DC) wird der Prozedurteil gestartet, mit welcher angegeben wird, ab wann der neue Schlüssel für die Seite T gilt. Nach dem Empfang der lokalen Meldung RLC-AM-DAT-R, sendet die Instanz RLC(DC) der Seite T (Terminal) die Meldung SEC-MO-CMPL(VTU, NU) an die Instanz RLC(DC) der Seite F (Funknetzwerk-Steuerung). Diese Meldung stellt einen Befehl im Sicherheitsmode (security mode command) dar und wird mit dem alten, bisher gültigen Schlüssel verschlüsselt. In der Meldung ist eine Dateneinheit mit den Nummern VTU und NU enthalten. Nach Empfang dieser Meldung zeigt die Instanz RLC(DC) der Schicht RRC der Seite F über die lokale Meldung RLC-AM-DAT-I an, dass die Meldung mit der Angabe angekommen ist, ab wann der neue Schlüssel zum Entschlüsseln in der Funknetzwerk-Steuerung 1 gelten soll. Dieser neue Schlüssel gilt nämlich nach der Folgenummer VTU + NU einer Dateneinheit. Der Empfang der Meldung SEC-MO-CMPL(VTU, NU) in der Instanz RLC(DC) der Seite F wird über einen Befehl ACK der Instanz RLC(DC) der Seite F und weiter der Schicht RRC über die lokale Meldung RLC-AM-DAT-C bestätigt. Damit ist dem Terminal bekannt, dass der Funknetzwerk-Steuerung 1 bekannt ist, dass das Terminal den neuen Schlüssel zum Verschlüsseln von Dateneinheiten eigener Meldungen ab der Folgenummer VTU + NU verwendet.

Die Fig. 7 zeigt einen weiteren auf den Prolog folgenden Teil der Prozedur, der als erster Prüfteil bezeichnet wird. Hierbei werden mit dem neuen Schlüssel verschlüsselte Dateneinheiten in Meldungen von den beiden Seiten T und F korrekt verschlüsselt und erkannt. Der erste Prüfteil startet mit der lokalen Meldung CRLC-CONF-R(VTU + NU), die auf der Seite F von der Schicht RRC zur Instanz RLC(DC) transferiert wird. Damit wird der Instanz RLC(DC) mitgeteilt, dass alle vom Terminal empfangenen Meldungen mit dem neuen Schlüssel entschlüsselt werden sollen, wenn für die Folgenummer SN der nächsten Dateneinheit die Bedingung SN $\geq$ VTU + NU oder SN = VR gilt, wobei VR die nächste erwartete, erstmals zu sendende Dateneinheit darstellt. Die Instanz RLC(DC) bestätigt den Empfang der lokalen Meldung CRLC-CONF-R(VTU + NU) durch das Versenden der lokalen Meldung CRLC-CONF-C an die Schicht RRC. Auf der Seite T wird mit dem Transfer der lokalen Meldung CRLC-CONF-R(AP) von der Schicht RRC zur Instanz RLC(DC) der Instanz RLC(DC) mitgeteilt, dass nach dieser Meldung die nächsten zur Seite F (Funknetzwerk-Steuerung 1) zu übertragenden Dateneinheiten mit dem neuen Schlüssel verschlüsselt werden. Empfangene Meldungen der Seite F müssen jedoch noch mit dem alten Schlüssel entschlüsselt werden. Die Instanz RLC(DC) bestätigt der Schicht RRC auf der Seite T den Empfang der lokalen Meldung CRLC-CONF-R(AP) mit der lokalen Meldung CRLC-CONF-C.

Mit dem folgenden Meldungsablauf wird geprüft, ob beide Seiten T und F denselben neuen Schlüssel verwenden. Dieser Meldungsablauf wird von der Schicht RRC der Seite F mit der lokalen Meldung RLC-AM-DAT-R an die Instanz RLC(DC) gestartet. Hiermit wird die Instanz RLC(DC) der Seite F aufgefordert, eine mit dem alten Schlüssel verschlüsselte Meldung SCKC an die Instanz RLC(DC) der Seite T zu senden. Nach Empfang dieser Meldung SCKC sendet die Instanz RLC(DC) der Seite T eine Empfangsbestätigung ACK an die Instanz RLC(DC) der Seite F. Die Schicht RRC der Seite T übergibt in der lokalen Meldung RLC-AM-DAT-R der Instanz RLC(DC) der Seite T eine Nachricht N(CKCC), welche die Instanz RLC(DC) der Seite T in eine oder mehrere Dateneinheiten zerlegt. Die Instanz RLC(DC) der Seite T verschlüsselt diese Dateneinheiten mit dem neuen Schlüssel und sendet sie (Meldung CKCC in Fig. 7) an die Instanz RLC(DC) der Seite F. Die Instanz RLC (DC) der Seite F entschlüsselt alle empfangenen Dateneinheiten der Meldung CKCC mit dem neuen Schlüssel, baut die Nachricht N(CKCC) aus den in der Meldung CKCC gesendeten Dateneinheiten zusammen und übergibt diese Nachricht N(CKCC) in der lokalen Meldung RLC-AM-DAT-I* an die Schicht RRC der Seite F. Die lokale Meldung RLC-AM-DAT-I* wird nur für die Nachricht N(CKCC) verwendet, deren erste Dateneinheit nach Empfang der lokalen Meldung CRLC-CONF-R(VTU + NU) die Folgenummer SN = VR hatte (diese ist gerade die Meldung CKCC). Dadurch weiß die Schicht RRC der Seite F, dass sie die Nachricht N(CKCC) von der Instanz RLC(DC) entgegennimmt.

Wurde von der Seite T der richtige neue Schlüssel verwendet, so erhält die Schicht RRC der Seite F in der lokalen Meldung RLC-AM-DAT-I* die erwartete Nachricht N(CKCC). Wurde von der Seite T ein falscher neuer Schlüssel verwendet, so erhält die Schicht RRC der Seite F in der lokalen Meldung RLC-AM-DAT-I* eine sinnlose oder unbekannte Meldung. Daraus schließt die Schicht RRC der Seite F, dass die Seite T einen falschen Schlüssel verwendet hat, d.h. die unbekannte Meldung wird in diesem speziellen Fall nicht ignoriert.

Nach Empfang der Meldung CKCC bestätigt die Instanz RLC(DC) der Seite F der Instanz RLC(DC) der Seite T den Empfang der Meldung CKCC durch den Befehl ACK. Der Empfang wird von der Instanz RLC (DC) der Seite T durch die lokale Meldung RLC-AM-DAT-C an die Schicht RRC weitergereicht.

Nach Empfang der in der Meldung RLC-AM-DAT-I* enthaltenen Nachricht sendet die Schicht RRC der Seite F die Nachricht N(CKST), die einen Hinweis darüber enthält, ob die Seite T den richtigen oder einen falschen neuen Schlüssel verwendet (CKST = Cipher Key Status) hat, an die Schicht RRC von T. Dieses geschieht wieder dadurch, dass die Schicht RRC der Seite F in der lokalen Meldung RLC-AM-DAT-R diese Nachricht N(CKST) an die Instanz RLC(DC) der Seite F gibt, die diese Nachricht in eine oder mehrere Dateneinheiten zerlegt und mit dem alten Schlüssel verschlüsselt an die Instanz RLC(DC) der Seite T mit der Meldung CKST sendet. Die Instanz RLC(DC) der Seite T bestätigt mit der Meldung ACK den Erhalt dieser Dateneinheiten, entschlüsselt sie mit dem alten Schlüssel und baut die Nachricht N(CKST) wieder zusammen. Diese Nachricht N(CKST) wird in einer lokalen Meldung RLC-AM-DAT-I an die Schicht RRC der Seite T weitergereicht.

Wird auf der Seite T der richtige neue Schlüssel verwendet, so instruiert die Schicht RRC der Seite F die Instanz RLC(DC) mit der lokalen Meldung CRLC-RES-R, die Übertagung von Dateneinheiten unter Verwendung des neuen Schlüssels wieder aufzunehmen. Das Entschlüsseln auf der Seite F erfolgt mit dem neuen Schlüssel, wenn für die Folgenummer SN der empfangenen Dateneinheit gilt $SN \geq VTU + NU$.

Enthält die Meldung CKST die Bestätigung, dass der von der Seite T verwendete neue Schlüssel korrekt ist, so instruiert die Schicht RRC der Seite T ihre Instanz RLC(DC) mit der lokalen Meldung CRLC-RES-R, die Übertagung von Dateneinheiten unter Verwendung des neuen Schlüssels wieder aufzunehmen. Das Entschlüsseln auf der Seite T erfolgt mit dem neuen Schlüssel, wenn für die Folgenummer SN der empfangenen Dateneinheit gilt $SN \geq VTD + ND$ (Fig. 7).

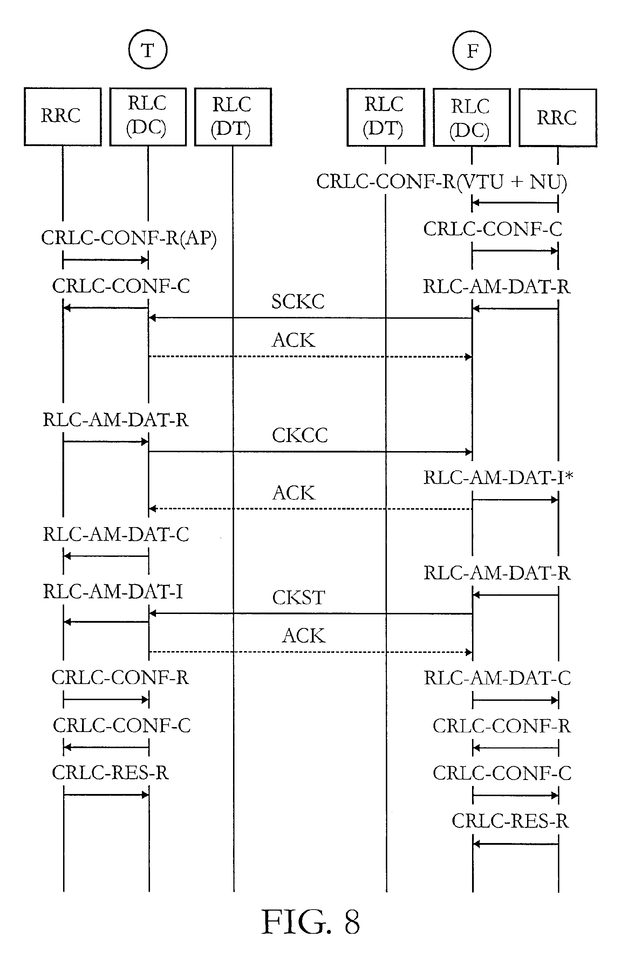

Wird auf der Seite T ein falscher neuer Schlüssel verwendet (vgl. Fig. 8, die den ersten Prüfteil für einen falschen Schlüssel zeigt), so instruiert die Schicht RRC der Seite F die Instanz RLC(DC) der Seite F mit der lokalen Meldung CRLC-CONF-R darüber, dass die Umstellung auf den neuen Schlüssel für das Entschlüsseln bei Erfüllung der Bedingung $SN \geq VTU + NU$ wieder rückgängig gemacht wird. Für das Verschlüsseln von Dateneinheiten, deren Übertragung noch angehalten ist, wird ebenfalls wieder der alte Schlüssel verwendet Die lokale Meldung CRLC-CONF-R wird durch die lokale Meldung CRLC-CONF-C von der Instanz RLC(DC) quittiert. Mit einer lokalen Meldung CRLC-RES-R teilt die Schicht RRC der Seite F der Instanz RLC(DC) mit, die Übertragung von Dateneinheiten (mit dem alten Schlüssel) wieder aufzunehmen.

Enthält die Meldung CKST den Hinweis, dass der von Seite T verwendete neue Schlüssel nicht der richtige ist, so instruiert die Schicht RRC der Seite T die Instanz RLC(DC) mit einer lokalen Meldung CRLC-CONF-R, welche mit einer Meldung CRLC-CONF-C quittiert wird, dass die Umstellung auf den neuen Schlüssel für das Entschlüsseln bei Erfüllung der Bedingung SN>=VTD+ND wieder rückgängig gemacht wird. Für das Verschlüsseln von Dateneinheiten, deren Übertragung noch angehalten ist, wird ebenfalls der alte Schlüssel verwendet. Mit einer lokalen Meldung CRLC-RES-R teilt die Schicht RRC der Seite F der Instanz RLC (DC) mit, die Übertagung von Dateneinheiten (mit dem alten Schlüssel) wieder aufzunehmen.

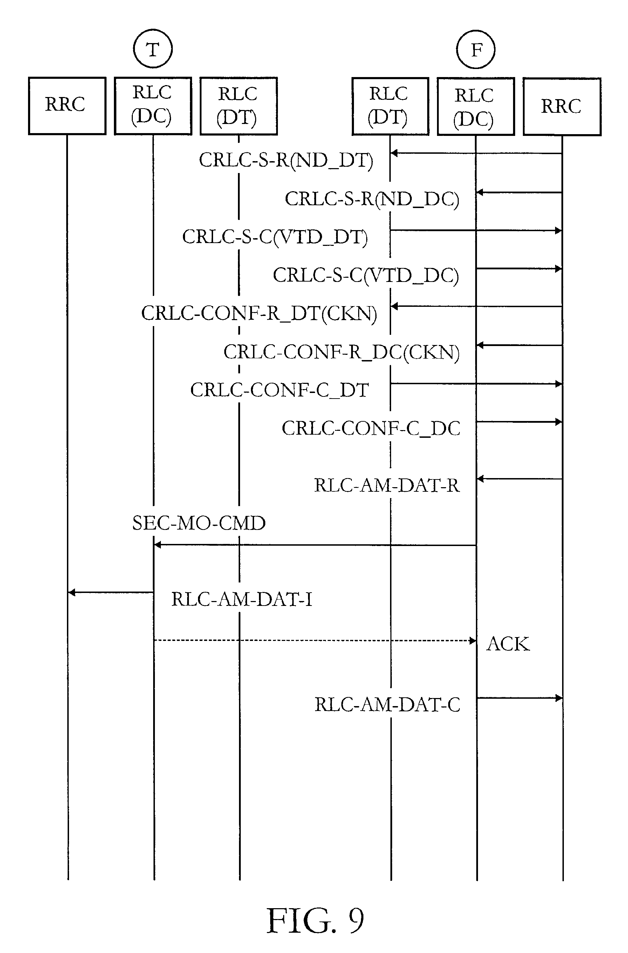

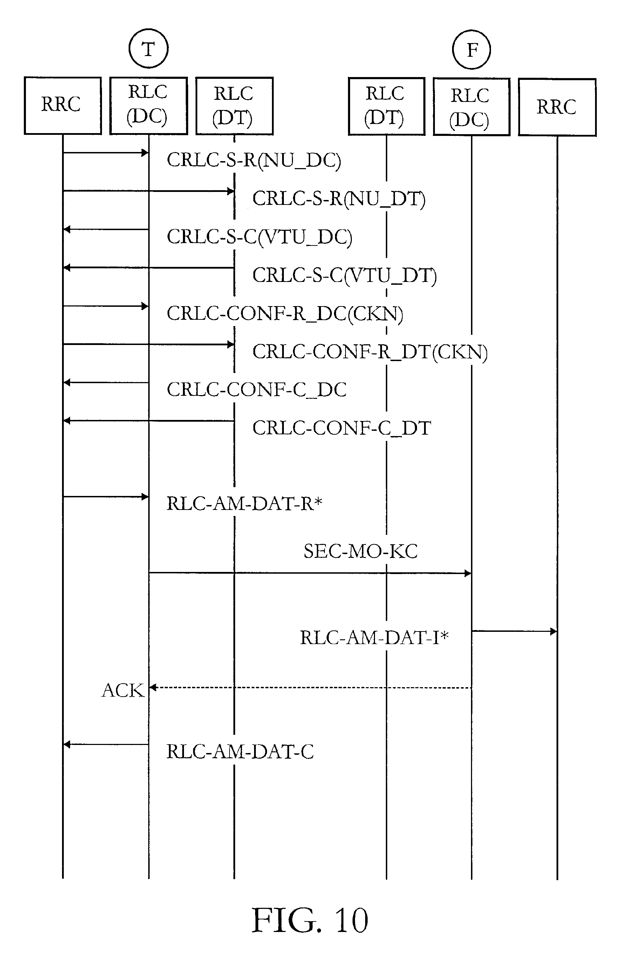

Die vierte Schlüsseländerungs-Prozedur CKC4 wird mit Hilfe der Fig. 9 bis 12 erläutert. Die Fig. 9 und 10 beschreiben die Schlüsseländerungs-Prozedur CKC4 für den Fall, dass das Terminal den korrekten neuen Schlüssel verwendet bzw. dass das Terminal einen falschen neuen Schlüssel verwendet. Da vor dem endgültigen Umschalten auf Verschlüsselung und Entschlüsselung mit dem neuen Schlüssel erst noch überprüft wird, ob das Terminal den richtigen neuen Schlüssel verwendet, kann im Fehlerfall die Ver- und Entschlüsselung mit dem alten Schlüssel ohne den sonst resultierenden vollständigem Abbruch aller Verbindungen zwischen den Seiten T und F (datenverlustfrei) wieder fortgesetzt werden. In der nachfolgend beschriebenen Prozedur wird neben der Signalisierungsverbindung (DC) ein einziger dedizierter Nutzkanal betrachtet. Im allgemeinen Fall sind mehrere dedizierte Nutzkanäle und weitere dedizierte Steuerungskanäle (die nicht für die Signalisierungszwecke der Prozedur CKC verwendet werden) möglich, für die Prozedur entsprechend zu erweitern ist.

Die Prozedur CKC4 (Fig. 9) wird durch die lokalen Meldungen CRLC-S-R(ND_DC) bzw. CRLC-S-R (ND_DT) von der Schicht RRC der Seite F an die Instanzen RLC(DC) bzw. RLC(DT) angestoßen. Mit der Meldung CRLC-S-R(ND_DC) bzw. CRLC-S-R (ND_DT) wird der Instanz RLC(DC) bzw. RLC(DT) mitgeteilt, dass die Übertragung von Dateneinheiten angehalten werden soll, sofern die Folgenummer SN einer Dateneinheit (Jede Dateneinheit wird mit einer Folgenummer markiert) die Bedingung $SN \geq VTD\_DC + ND\_DC$ bzw. $SN \geq VTD\_DT + ND\_DT$ erfüllt. Dabei bedeutet der Parameter ND_DC bzw. ND_DT der lokalen Meldung CRLC-S-R(ND_DC) bzw. CRLC-S-R(ND_DT) eine Anzahl von noch zu übertragenden Dateneinheiten, und VTD_DC bzw. VTD_DT ist die in RLC(DC) bzw. RLC (DT) bekannte Folgenummer SN der nächsten erstmals zu sendenden Dateneinheit. Für den Steuerkanal DC ist ND_DC mindestens so groß zu wählen, dass alle Dateneinheiten der nachfolgenden Downlink-Nachrichten SEC-MO-CMD und SEC-MO-KC (Fig. 9 und 10) vor dem Anhalten der Übertragung noch geschickt werden können. Für den Nutzkanal kann ND_DT auch zu Null gesetzt werden.

Mit der lokalen Meldung CRLC-S-C(VTD_DC) bzw. CRLC-S-C(VTD_DT) bestätigt die Instanz RLC (DC) bzw. RLC(DT) der Seite F den Empfang der Nummer ND_DC bzw. ND_DT und gibt der Schicht die Nummer VTD_DC bzw. VTD_DT bekannt. Anschließend teilt die Schicht RRC der Seite F der Instanz RLC(DC) bzw.

RLC(DT) über die Meldung CRLC-CONF-R_DC(CKN) bzw. CRLC-CONF-R_DT(CKN) den neuen zu verwendenden Schlüssel CKN mit. Diese Meldung wird von RLC(DC) bzw. RLC(DT) der Seite F mit der lokalen Meldung CRLC-CONF-C_DT bzw. CRLC-CONF-C_DC bestätigt.

Die Instanz RLC(DC) der Seite F sendet die in der lokalen Meldung RLC-DAT-R von der Schicht RRC erhaltene Nachricht SEC-MO-CMD an die Instanz RLC (DC) der Seite T (Terminal). Diese Nachricht stellt einen Befehl im Sicherheitsmode (security mode command) dar und wird mit dem alten, bisher gültigen Schlüssel verschlüsselt. In der Nachricht, die aus einer oder mehreren Dateneinheiten bestehen kann, sind die Nummern VTD_DC, ND_DC, VTD_DT und VTD_DT enthalten.

Nach Empfang dieser Nachricht zeigt die Instanz RLC(DC) der Schicht RRC der Seite T über die lokale Meldung RLC-AM-DAT-I an, dass diese Nachricht mit der Angabe angekommen ist, ab wann der neue Schlüssel gelten soll. Dieser neue Schlüssel gilt nämlich auf dem Steuerkanal DC für das Entschlüsseln ab der Folgenummer VTD_DC + ND_DC einer Dateneinheit und auf dem Nutzkanal ab der Folgenummer VTD_DT + ND_DT. Der Empfang der Nachricht SEC-MO-CMD in der Instanz RLC(DC) der Seite T wird über eine Empfangsbestätigung ACK der Instanz RLC(DC) der Seite F und weiter der Schicht RRC über die lokale Meldung RLC-AM-DAT-C bestätigt. Damit ist der Funknetzwerk-Steuerung 1 bekannt, dass das Terminal über den Beginn der Schlüsseländerungsprozedur informiert ist und den neuen Schlüssel zur Entschlüsselung von Dateneinheiten verwendet, deren Folgenummer SN die Bedingung $SN \geq VTD\_DC + ND\_DC$ im Falle des Steuerungskanals und $SN \geq VTD\_DT + ND\_DT$ im Falle eines Nutzkanals erfüllt.

Mit den oben erwähnten lokalen Meldungen CRLC-CONF-R_DC(CKN) bzw. CRLC-CONF-R_DT (CKN) instruiert nun die Schicht RRC der Seite F die Instanz RLC(DC) bzw. RLC(DT), alle neuen, d.h. nicht als Wiederholung gesendeten, erwarteten Dateneinheiten (bis zur Vervollständigung der nächsten Nachricht) mit dem neuen Schlüssel zu entschlüsseln. Dies sind gerade die Dateneinheiten, für deren Folgenummer SN beim Empfang der gerade genannten lokalen Meldung CRLC-CONF-R_DC(CKN) bzw. CRLC-CONF-R_DT (CKN) die Bedingung $SN \geq VR$ erfüllt ist, wobei VR die in der Instanz RLC(DC) vorgehaltene Variable ist, welche die Folgenummer der nächsten, nicht als Wiederholung gesendeten, erwarteten Dateneinheit bedeutet.

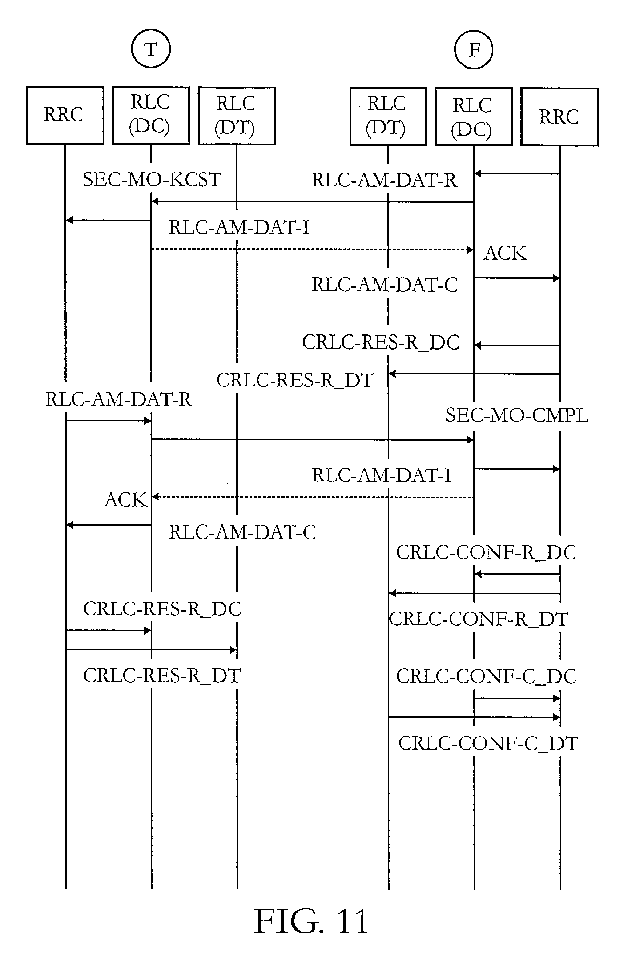

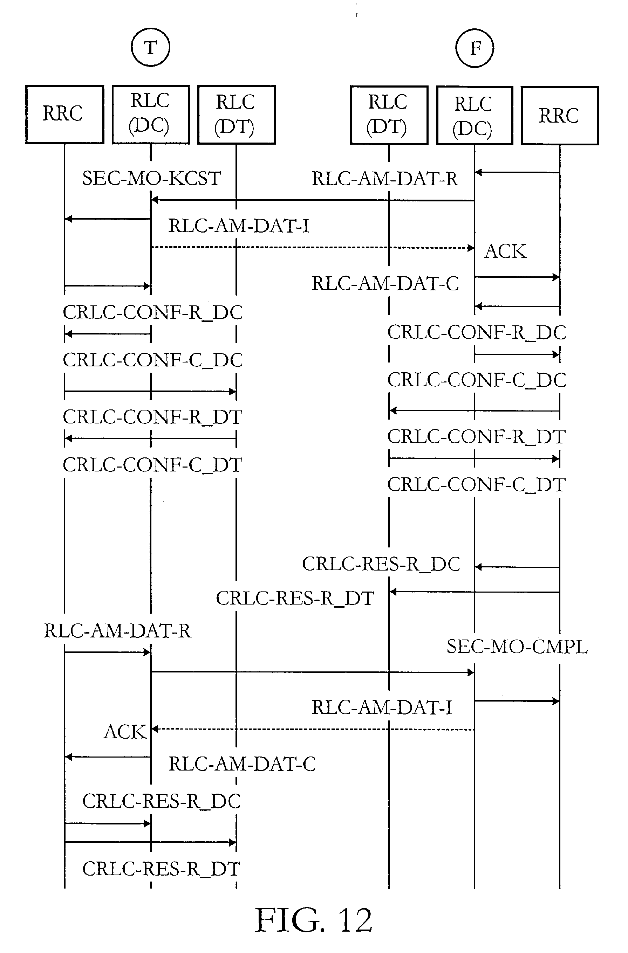

Von der Seite T (Terminal) ausgehend (Fig. 10) wird ein ähnlicher Nachrichtenaustauschzwischen den betroffenen Schichten durchgeführt. Eine lokale Meldung CRLC-S-R (NU_DC) an die Instanz RLC(DC) bzw. CRLC-S-R(NU_DT) an die Instanz RLC(DT) von der Schicht RRC der Seite T startet den von der Seite T ausgehenden Nachrichtenaustausch. Mit diesen beiden lokalen Meldungen wird die Übertragung von Dateneinheiten angehalten, deren Nummer die Bedingung SN $\geq$ VTU_DC + NU_DC (für den Steuerkanal) bzw. SN $\geq$ VTU_DT + NU_DT (für den Nutzkanal) erfüllt, und der Instanz RLC(DC) bzw. RLC(DT) die Anzahl NU_DC bzw. NU_DT von noch zu übertragenen Dateneinheiten mitgeteilt. Für den Steuerkanal DC ist NU_DC (mindestens) so groß zu wählen, dass alle Dateneinheiten der nachfolgenden Uplink-Nachrichten SEC-MO-KC (Fig. 10) und SEC-MO-CMPL (Fig. 11 und 12) vor dem Anhalten der Übertragung noch geschickt werden können. Für den Nutzkanal kann NU_DT auch zu Null gesetzt werden.

Mit der lokalen Meldung CRLC-S-C(VTU_DC) bzw. CRLC-S-C(VTU_DT) bestätigt die Instanz RLC(DC) bzw. RLC(DT) der Seite T den Empfang der Nummer NU_DC bzw. NU_DT und gibt der Schicht die Nummer VTU_DC bzw. VTU_DT an. Diese Nummer VTU_DC bzw. VTU_DT gibt die Folgenummer SN der Dateneinheit an, die nach Empfang der lokalen Meldung CRLC-S-C(VTU_DC) bzw. CRLC-S-C(VTU_DT) auf dem Steuerkanal bzw. dem Nutzkanal im Uplink erstmals gesendet wird (also keine wiederholte Übertragung). Anschließend teilt die Schicht RRC der Seite T den Instanzen RLC(DC) bzw. RLC(DT) einen Schlüsseländerungswunsch über die lokale Meldung CRLC-CONF-R_DC(CKN) bzw. CRLC-CONF-R_DT(CKN) mit. Mit den Nummern VTD_DC + ND_DC, VTD_DT + ND_DT wird außerdem diejenige Folgenummer von Dateneinheiten mitgeteilt, ab der mit dem neuen Schlüssel entschlüsselt werden sollen. Diese lokale Meldung wird von RLC(DC) und RLC(DT) der Seite T jeweils mit der lokalen Meldung CRLC-CONF-C_DC bzw. CRLC-CONF-C_DC bestätigt.

Mit der lokalen Meldung RLC-AM-DAT-R* von der Schicht RRC der Seite T an die Instanz RLC(DC) beginnt der Prozedurteil, mit dem die Seite F überprüfen kann, ob die Seite T den richtigen neuen Schlüssel benutzt. Nach dem Empfang der lokalen Meldung RLC-AM-DAT-R*, sendet die Instanz RLC(DC) der Seite T (Terminal) die Nachricht SEC-MO-KC an die Instanz RLC(DC) der Seite F (Funknetzwerk-Steuerung 1) verschlüsselt mit dem neuen Schlüssel. Der hochgesetzte Stern ("*") bedeutet, dass (z.B. durch einen zusätzlichen Parameter (Flag) in der lokalen Meldung RLC-AM-DAT-R) der Instanz RLC(DC) angezeigt wird, dass für diese spezielle Nachricht der neue Schlüssel zur Verschlüsselung verwendet werden soll.

Die Folgenummern der Dateneinheiten dieser Nachricht erfüllen in der Instanz RLC(DC) der Seite F die Bedingung SN $\geq$ VR, so dass sie mit dem neuen Schlüssel entschlüsselt werden. Die aus den Dateneinheiten, die mit dem neuen Schlüssel entschlüsselt wurden, wieder zusammengebaute Nachricht wird nun mit der lokalen Meldung RLC-AM-DAT-I* an die Schicht RRC der Seite F gegeben, wobei der hochgesetzte Stern ("*") bedeutet, dass (z.B. durch einen zusätzlichen Parameter (Flag) in der lokalen Meldung RLC-AM-DAT-I) der Schicht RRC angezeigt wird, dass die als Parameter übermittelte Nachricht aus Dateneinheiten zusammengebaut wurde, die mit dem neuen Schlüssel entschlüsselt wurden. Für eine sichere Überprüfung des korrekten Schlüssels kann es erforderlich sein, dass die Nachricht SEC-MO-KC aus mehreren Dateneinheiten besteht.

Die Schicht RRC der Seite F erwartet zu diesem Zeitpunkt genau die Nachricht SEC-MO-KC. Wird auf der Seite T der richtige neue Schlüssel zum Verschlüsseln verwendet, so erkennt die Schicht RRC im Parameter der lokalen Meldung RLC-AM- DAT-I* diese Nachricht, und die Prozedur verläuft weiter wie in den Fig. 10 und 11 beschrieben.

Wird auf der Seite T ein falscher neuer Schlüssel zum Verschlüsseln verwendet, so erkennt die Schicht RRC im Parameter der lokalen Meldung RLC-AM-DAT-I* keine sinnvolle oder bekannte Nachricht. In diesem speziellen Fall, in dem eine unbekannte Nachricht mit der lokalen Meldung RLC-AM-DAT-I* von der Schicht RRC empfangen wurde, verwirft die Schicht RRC diese unbekannte Nachricht nicht einfach, sondern folgert, dass die Seite T einen falschen neuen Schlüssel verwendet. Die Prozedur setzt sich in diesem Falle, wie in Fig. 12 dargestellt, fort.

In beiden Fällen versendet die Schicht RRC der Seite F (als Parameter der lokalen Meldung RLC-AM-DAT-R an die Instanz RLC(DC) ) an die Seite T die Nachricht SEC-MO-KCST, die einen Hinweis darüber enthält, ob die Schicht RRC der Seite F festgestellt hat, ob die Seite T den richtigen neuen Schlüssel verwendet oder einen falschen. Die Dateneinheiten der Nachricht SEC-MO-KCST werden immer mit dem alten Schlüssel verschlüsselt.

Im folgenden wird der in Fig. 11 gezeigte Normalfall beschrieben. Nach Empfang der lokalen Meldung RLC-AM-DAT-C, welche die Empfangsbestätigung ACK von RLC(DC) der Seite T für den Empfang der Nachricht SEC-MO-KCST der Seite F an die Schicht RLC(DC) der Seite F weiterreicht, instruiert die Schicht RRC der Seite F die Instanzen RLC(DC) und RLC(DT) mit der lokalen Meldung CRLC-RES-R_DC bzw. CRLC-RES-R_DT, die bisher angehaltenen Übertragungen von Dateneinheiten, deren Folgenummern SN in RLC(DC) die Bedingung SN $\geq$ VTD_DC + ND_DC bzw. in RLC(DT) die Bedingung SN $\geq$ VTD_DT + ND_DT erfüllen, wieder aufzunehmen.

Diese Dateneinheiten werden mit dem neuen Schlüssel verschlüsselt.

Im folgenden wird der in Fig. 12 gezeigte Fehlerfall beschrieben. Nach Empfang der lokalen Meldung RLC-AM-DAT-C, welche die Empfangsbestätigung ACK von RLC(DC) der Seite T für den Empfang der Nachricht SEC-MO-KCST der Seite F an die Schicht RRC weiterreicht, instruiert die Schicht RRC der Seite F nach weiter unten beschriebenen ablaufenden Meldungen die Instanzen RLC(DC) und RLC(DT), zunächst mittels der lokalen Meldungen CRLC-CONF-R_DC bzw. CRLC-CONF-R_DT, bestätigt durch CRLC-CONF-C_DC bzw. CRLC-CONF-C_DT, die Umstellung auf den neuen Schlüssel rückgängig zu machen, und anschließend mit den lokalen Meldungen CRLC-RES-R_DC bzw. CRLC-RES-R_DT, die bisher angehaltenen Übertragungen von Dateneinheiten, deren Folgenummern SN in RLC(DC) die Bedingung SN $\geq$ VTD_DC + ND_DC bzw. in RLC(DT) die Bedingung SN $\geq$ VTD_DT + ND_DT erfüllen, wieder aufzunehmen. Diese Dateneinheiten werden mit dem alten Schlüssel verschlüsselt.

Durch die Empfangsbestätigung ACK wird der Seite T der Empfang der Nachricht SEC-MO-KC auf der Seite F bestätigt (Fig. 10). Die lokale Meldung RLC-AM-DAT-C gibt diese Bestätigung an die Schicht RRC auf der Seite T weiter. Nach Empfang dieser Bestätigung erwartet die Seite T die Nachricht SEC-MO-KCST von der Seite F (Fig. 11 und 12). Bei Empfang der Nachricht SEC-MO-KCST in der Instanz RLC(DC), deren Empfang wieder mit der Nachricht ACK der Seite F bestätigt wird, reicht diese Instanz der Seite T die Nachricht SEC-MO-KCST als Parameter der lokalen Meldung RLC-AM-DAT-I an die Schicht RRC der Seite T weiter.

Wenn im Normalfall (Fig. 11) die Nachricht SEC-MO-KCST der Seite T anzeigt, dass der verwendete neue Schlüssel der richtige ist, versendet die Seite T die Nachricht SEC-MO-CMPL an die Seite F. Nach dem Empfang der lokalen Meldung RLC-AM-DAT-R (Fig. 11), sendet die Instanz RLC(DC) der Seite T (Terminal) die Nachricht SEC-MO-CMPL an die Instanz RLC(DC) der Seite F (Funknetzwerk-Steuerung). Diese Nachricht stellt einen Befehl im Sicherheitsmode (security mode complete) dar und wird mit dem alten, bisher gültigen Schlüssel verschlüsselt. Die Nachricht besteht aus einer oder mehreren Dateneinheiten und übermittelt die Nummern VTU_DC, NU_DC, VTU_DT und NU_DT. Nach Empfang dieser Nachricht zeigt die Instanz RLC(DC) der Schicht RRC der Seite F über die lokale Meldung RLC-AM-DAT-I an, dass diese Nachricht mit der Angabe angekommen ist, ab wann der neue Schlüssel zum Entschlüsseln in der Funknetzwerksteuerung gelten soll. Dieser neue Schlüssel gilt nämlich für Dateneinheiten, deren Folgenummer SN die Bedingung SN $\geq$ VTU_DC + NU_DC (Steuerkanal) bzw. SN $\geq$ VTU_DT + NU_DT (Nutzkanal) erfüllt.

Nach Empfang der Nachricht SEC-MO-CMPL instruiert die Schicht RRC von F ihre Instanzen RLC (DC) und RLC(DT) mittels der lokalen Meldungen CRLC-CONF-R_DC bzw. CRLC-CONF-R_DT für das Entschlüsseln aller Dateneinheiten, deren Folgenummer SN die Bedingung SN $\geq$ VTU_DC + NU_DC in der Instanz RLC(DC) bzw. die Bedingung SN $\geq$ VTU_DT + NU_DT in der Instanz RLC(DT) erfüllt, den neuen Schlüssel zu verwenden. Damit endet die Prozedur CKC auf der Seite F im Normalfall.

Der Empfang der Nachricht SEC-MO-CMPL in der Instanz RLC(DC) der Seite F wird über die Empfangsbestätigung ACK der Instanz RLC(DC) der Seite T und weiter ihrer Schicht RRC über die lokale Meldung RLC-AM-DAT-C bestätigt. Damit ist dem Terminal bekannt, dass der Funknetzwerk-Steuerung 1 bekannt ist, dass das Terminal den neuen Schlüssel zum Verschlüsseln von Dateneinheiten eigener Nachrichten ab der Folgenummer VTU_DC + NU_DC auf dem Steuerkanal und VTU_DT + NU_DT auf dem Nutzkanal verwendet.

Da die Seite T den korrekten neuen Schlüssel verwendet, instruiert ihre Schicht RRC die Instanz RLC (DC) bzw. RLC(DT) nach Empfang der lokalen Meldung RLC-AM-DAT-C mit den lokalen Meldungen CRLC-RES-R_DC bzw. CRLC-RES-R_DT (Fig. 11) die bis dahin angehaltene Übertragung von Dateneinheiten wieder aufzunehmen, deren Folgenummern SN die Bedingung SN $\geq$ VTU_DC + NU_DC in der Instanz RLC(DC) für den Steuerkanal bzw. SN $\geq$ VTU_DT + NU_DT in der Instanz RLC(DT) für den Nutzkanal erfüllen. Diese Dateneinheiten werden mit dem neuen Schlüssel verschlüsselt. Damit endet die Prozedur CKC4 auf der Seite T im Normalfall.

Wenn die Nachricht SEC-MO-KCST der Seite T anzeigt, dass der verwendete neue Schlüssel ein falscher (Fehlerfall) ist (Fig. 12), instruiert ihre Schicht RRC die Instanzen RLC(DC) und RLC(DT) mittels der beiden lokalen Meldungen CRLC-CONF-R_DC bzw. CRLC_CONF-R_DT, die vorbereitete Umschaltung auf den neuen Schlüssel wieder rückgängig zu machen.

Außerdem versendet die Seite T die Nachricht SEC-MO-CMPL an die Seite F, um die Prozedur zu beenden. Hierbei wird diese Nachricht als Parameter der lokalen Meldung RLC-AM-DAT-R an die Instanz RLC (DC) gegeben, über die Funkschnittstelle an die Instanz RLC(DC) der Seite F geschickt und von dieser als Parameter der lokalen Meldung RLC-AM-DAT-I der Schicht RRC der Seite F übergeben. Da kein Umschalten auf die Verwendung des neuen Schlüssels erfolgt, braucht die Nachricht SEC-MO-CMPL die Nummern VTU_DC, NU_DC, VTU_DT und NU_DT nicht zu enthalten. Die Dateneinheiten der Nachricht SEC-MO-CMPL werden ebenfalls mit dem alten Schlüssel verschlüsselt.

Da für das Entschlüsseln noch keinerlei Änderung in den Instanzen RLC(DC) bzw. RLC(DT) der Seite F erfolgt ist, ist auch keine Rekonfigurierung dieser Instanzen für das Entschlüsseln erforderlich, so dass die Prozedur CKC im Fehlerfall auf der Seite F mit dem Empfang der Nachricht SEC-MO-CMPL endet.

Nach Erhalt der Empfangsbestätigung ACK für die Nachricht SEC-MO-CMPL der Schicht RLC(DC) der Seite T, wird diese an die Schicht RRC der Seite T durch die lokale Meldung RLC-AM-DAT-C weitergereicht. Die Schicht RRC der Seite T instruiert dann die Instanzen RLC(DC) und RLC(DT) mittels der beiden lokalen Meldungen CRLC-RES-C_DC bzw. CRLGRES-C_DT die bis dahin angehaltene Übertragung von Dateneinheiten wieder aufzunehmen, deren Folgenummern SN die Bedingung SN $\geq$ VTU_DC + NU_DC in der Instanz RLC (DC) für den Steuerkanal bzw. SN $\geq$ VTU_DT + NU_DT in der Instanz RLC(DT) für den Nutzkanal erfüllen. Diese Dateneinheiten werden wegen der zuvor mittels der beiden lokalen Meldungen CRLC-CONF-R_DC in der Instanz RLC(DC) und CRLC-CONF-K_DT in der Instanz RLC(DT) rückgängig gemachten Umschaltung auf den neuen Schlüssel mit dem alten Schlüssel verschlüsselt. Damit endet im Fehlerfall die Prozedur CKC auf der Seite T.

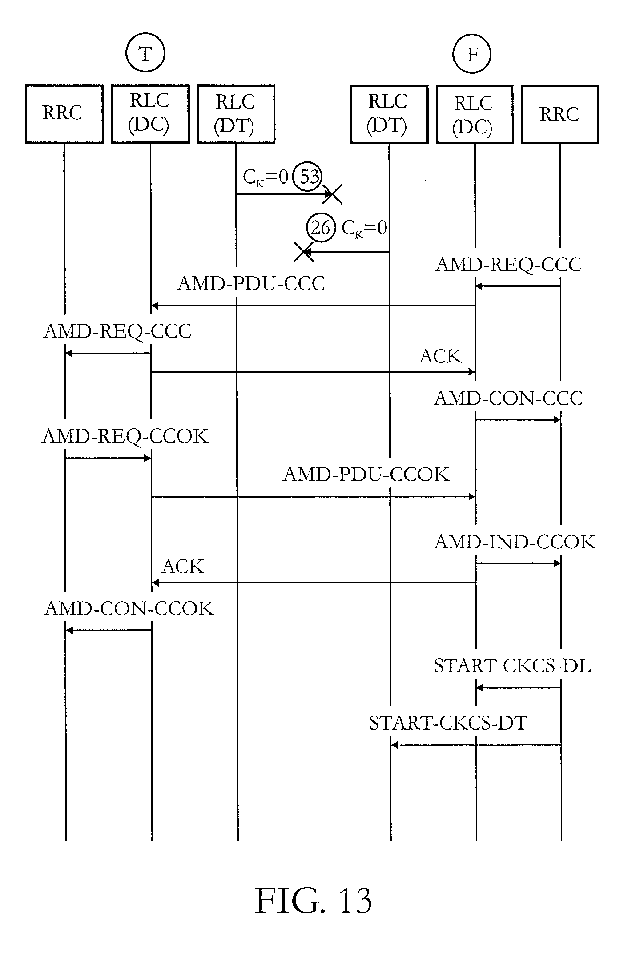

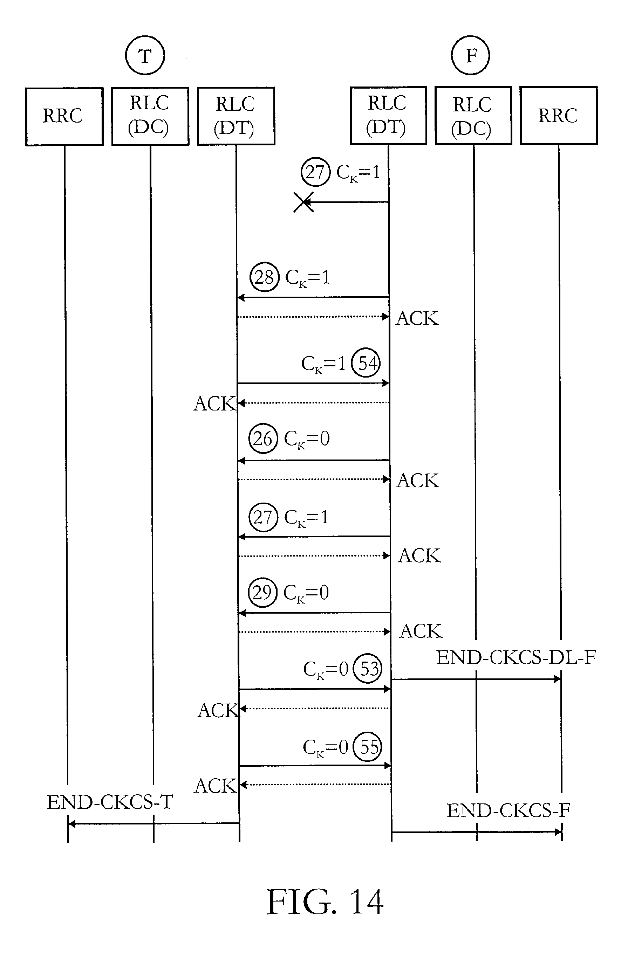

Die fünfte Schlüsseländerungs-Prozedur CKC5 wird anhand der Fig. 13 und 14 beschrieben. Wie oben erwähnt, werden lokale Meldungen zwischen den Schichten RLC und RRC bei dieser Prozedur übertragen. Die Schicht RLC verfügt über zwei Instanzen RLC (DC) und RLC(DT). Die Instanz RLC(DT) ist für die Steuerung von dedizierten Nutzkanälen (dedicated traffic channel = DTCH) und die Instanz RLC(DC) für die Steuerung von dedizierten Steuerungskanälen (dedicated control channel = DCCH) zuständig. Das Terminal erhält die Information über den neuen Schlüssel in einer separaten Authentifizierungs-Prozedur zwischen Terminal und Funknetzwerk-Steuerung, wie sie beispielsweise in GSM beschrieben ist (vgl. "GSM Global System for Mobile Communication" von J. Eberspächer und H.-J. Vogel, Teubner Stuttgart 1997, Seiten 146 bis 154). Hierbei wird vermieden, dass der Schlüssel selbst über die Funkschnittstelle übertragen wird.

Mit der zu beschreibenden Prozedur CKC5 wird ein synchronisiertes Umschalten vom alten auf den neuen Schlüssel zwischen Terminal und Funknetzwerk-Steuerung durchgeführt. Die Prozedur CKC5 beginnt mit einer Prolog-Phase, der sich eine Synchronisations-Phase anschließt. Die Fig. 13 und 14 zeigen verschiedene Meldungen, die zwischen den Schichten RRC und RLC eines Terminals (linke Seite der Fig. 4 und 5, mit "T" angegeben) und der Funknetzwerk-Steuerung (rechte Seite der Fig. 4 und 5, mit "F" angegeben) gesendet werden.

Zuerst wird von der Funknetzwerk-Steuerung (vgl. Fig. 4) das Terminal über den beabsichtigten Wechsel zum neuen Schlüssel informiert. Auf der Seite F beauftragt dazu die Schicht RRC die Instanz RLC(DC) mit der lokalen Meldung AMD-REQ-CCC eine Nachricht AMD-PDU-CCC an die Instanz RLC(DC) der Seite T zu senden. Diese Instanz informiert die Instanz RLC(DC) der Seite F mit der Empfangsbestätigung ACK und die Schicht RRC der Seite T mit der lokalen Meldung AMD-REQ-CCC über die empfangene Nachricht. Auf der Seite F wird die Empfangsbestätigung ACK von RLC(DC) über die lokale Meldung AMD-CON-CCC an RRC weitergereicht.

Auf der Seite T beauftragt dazu die Schicht RRC die Instanz RLC(DC) mit der lokalen Meldung AMD-REQ-CCOK eine Nachricht AMD-PDU-CCOK an die Instanz RLC(DC) der Seite F zu senden. RLC(DC) der Seite F informiert die Instanz RLC(DC) der Seite T mit der Empfangsbestätigung ACK und die Schicht RRC der Seite F mit der lokalen Meldung AMD-IND-CCOK über die empfangene Nachricht. Auf der Seite T wird die Empfangsbestätigung ACK von RLC(DC) über die lokale Meldung AMD-CON-CCOK an die Schicht RRC weitergereicht.

Der bisher beschriebene Meldungs- und Nachrichtenaustausch wird als Prolog der Prozedur CKC5 bezeichnet. Die Nachrichten AMD-PDU-CCC und AMD-PDU-CCOK werden mit dem alten Schlüssel verschlüsselt. Diese Nachrichten weisen einen Steuerungsteil mit Steuerungsinformationen auf, der als RLC-Header bezeichnet wird. Ein spezielles Bit $C_K$ dieses RLC-Headers zeigt an, ob der neue oder alte Schlüssel verwendet wird. Durch Verwendung dieses speziellen Bits $C_K$ ist es möglich, dass eine Dateneinheit, die schon einmal vor der Prozedur CKC5 übertragen und dessen Empfang noch nicht bestätigt worden ist, erneut mit dem alten Schlüssel übertragen werden kann. Dateneinheiten werden mit dem neuen Schlüssel verschlüsselt, wenn sie zum ersten Mal nach dem Prolog wendet werden. Durch diese Maßnahme hört ein Lauscher bei Übertragungswiederholungen immer nur identische Kopien von schon einmal empfangenen verschlüsselten Dateneinheiten und erhält keine neuen Information, wenn er in der Phase einer Übertragungswiederholung den Kanal abhört.

Vor dem Prolog der Prozedur CKC5 ist dieses spezielle Bit $C_K$ auf Null gesetzt. Nach dem Prolog zeigt in der folgenden Synchronisations-Phase das auf Eins gesetzte spezielle Bit $C_K$ an, dass die Daten mit dem neuen Schlüssel verschlüsselt wurden, während das auf Null gesetzte Bit $C_K$ in der Synchronisations-Phase bedeutet, dass die Daten mit dem alten Schlüssel verschlüsselt wurden.

Die Synchronisations-Phase beginnt im Terminal und in der Funknetzwerksteuerung zu unterschiedlichen Zeiten: Im Downlink (DL) beginnt die Synchronisations-Phase mit der Übertragung der ersten Dateneinheit DL-new-new, nachdem die Schicht RRC den Instanzen RLC(DC) und RLC(DT) der Schicht RLC über die lokalen Meldungen START-CKCS-DL und START-CKCS-DT den Beginn der Synchronisations-Phase mitgeteilt hat. Eine (auf dem Downlink geschicktes) Dateneinheit heißt DL-new-new, wenn es zum ersten Mal nach dem Prolog übertragen wird. Eine Dateneinheit DL-new-new wird zu einer Dateneinheit DL-new, sobald eine Übertragungswiederholung erfolgt. Eine Dateneinheit wird als DL-old-old bezeichnet, wenn es schon vor dem Prolog (erstmals oder wiederholt) übertragen wurde. Es wird als DL-old bezeichnet, wenn es nach dem Prolog erneut übertragen wird.

Im Uplink (UL) beginnt die Synchronisations-Phase mit der Übertragung der ersten Dateneinheit UL-new-new. Eine (auf dem Uplink) geschickte Dateneinheit heißt UL-new-new, wenn sie zum ersten Mal nach dem Empfang der ersten Dateneinheit DL-new-new oder DL-new verschickt wird. Diese wird als Dateneinheit UL-new bezeichnet, sobald sie erneut übertragen wird. Eine Dateneinheit heißt UL-old-old, wenn diese vor dem Empfang der ersten Dateneinheit DL-new-new oder DL-new übertragen wird. Sie heißt Dateneinheit UL-old, wenn es sich um die erneute Übertragung einer Dateneinheit DL-old-old nach dem Empfang der ersten Dateneinheit DL-new-new oder DL-new handelt.

Die folgenden Regeln 1 bis 5 steuern die Synchronisations-Phase derart, dass das spezielle Bit $C_K$ auf den Wert Null gesetzt werden kann und die entsprechende Dateneinheit nur noch mit dem neuen Schüssel verschlüsselt übertragen werden, nachdem sowohl im Uplink als auch im Downlink alle Dateneinheiten UL-old und DL-old entweder erfolgreich (mit dem alten Schlüssel verschlüsselt) übertragen wurden oder die Maximalzahl der erlaubten Übertragungswiederholungen für diese Dateneinheiten erreicht wurde. Wenn die Maximalzahl erreicht worden ist, wird nicht weiter versucht, diese zu übertragen.

Regel 1:

Während der Synchronisations-Phase im Downlink sendet die RLC-Schicht (z.B. Instanz RLC (DT)) der Seite F mit dem neuen Schlüssel verschlüsselte Dateneinheiten DL-new-new und DL-new. Das spezielle Bit $C_K$ ist gleich Eins gesetzt. Dateneinheiten DL-old werden dagegen mit dem alten Schlüssel verschlüsselt gesendet, wobei das spezielle Bit $C_K$ gleich Null gesetzt ist. In Fig. 14 hat eine solche Dateneinheit die Dateneinheits-Nummer 26. Während der Synchronisations-Phase im Uplink sendet die RLC-Schicht (z. B. Instanz RLC(DT)) mit dem neuen Schlüssel verschlüsselte Dateneinheiten UL-new-new und UL-new, wobei das spezielle Bit $C_K$ gleich Eins gesetzt ist. Dateneinheiten UL-old werden mit dem alten Schlüssel verschlüsselt gesendet, wobei das spezielle Bit $C_K$ gleich Null gesetzt ist.

Regel 2:

Die RLC-Schicht speichert die laufende Dateneinheits-Nummer SN (sequence number) der ersten fehlerfrei empfangenen Dateneinheit DL-new-new oder DL-new. Diese Dateneinheits-Nummer ist Bestandteil des RLC-Headers und wird auf der Seite T als $SN_{F-DL}$(T) bezeichnet.

In Fig. 14 weist $SN_{F-DL}$(T) die Dateneinheits-Nummer 28 auf. Die zuvor gesendete Dateneinheit DL-new-new mit der Dateneinheits-Nummer 27 (Fig. 14) wurde nicht fehlerfrei übertragen. Wenn die Dateneinheit mit der Dateneinheits-Nummer 27 erneut übertragen wird, wird diese zu einer Dateneinheit DL-new.

Die RLC-Schicht der Seite F speichert die laufende Dateneinheits-Nummer der ersten quittierten Dateneinheit DL-new-new oder DL-new. Diese Dateneinheits-Nummer wird mit $SN_{F-DL}$(F) bezeichnet. In Fig. 14 hat $SN_{F-DL}$(F) ebenfalls den Wert 28 und gehört zu einer Dateneinheit DL-new-new.

Regel 3:

Die RLC-Schicht der Seite F speichert die laufende Nummer der ersten fehlerfrei empfangenen Dateneinheit UL-new-new oder UL-new. Diese Nummer wird mit $SN_{F-UL}$(F) bezeichnet. In Figur 14 hat sie den Wert 54 und stammt von einer Dateneinheit UL-new-new, während die Dateneinheit mit der Dateneinheits-Nummer 53 eine Dateneinheit UL-old ist.

Im allgemeinen gilt:

$$SN_{F-DL}(T) \leq SN_{F-DL}(F)$$

und

$$SN_{F-UL}(F) \leq SN_{F-UL}(T).$$

Diese Dateneinheits-Nummern $SN_{F-DL}$(T), $SN_{F-DL}$(F), $SN_{F-UL}$(F) und $SN_{F-UL}$(T) werden während der Prolog-Phase mit ungültigen Werten belegt. Jede aus einem RLC-Header einer Dateneinheit entnommene Dateneinheits-Nummer ist ein gültiger Wert.

Regel 4:

Erst wenn $SN_{F-UL}$(F) einen gültigen Wert erhalten hat, kann die Synchronisations-Phase im Downlink beendet werden. Sie endet, sobald die RLC-Schicht der Seite F Quittungen für alle Dateneinheiten DL-old und DL-new erhalten hat oder die Maximalzahl von Übertragungswiederholungen aller Dateneinheiten DL-old oder DL-new erreicht wurde. Da die RLC-Schicht der Seite F alle Dateneinheiten kennt, die irgendwann einmal auf dem Downlink verschickt wurden, kann sie diese Entscheidung treffen. Das Ende der Synchronisations-Phase im Downlink wird der RRC-Schicht der Seite F durch die Meldung END-CKCS-DL-F mitgeteilt.

Das Ende der Synchronisations-Phase im Downlink wird der Seite T dadurch angezeigt, dass Dateneinheit DL-new-new mit dem auf Null gesetzten speziellen Bit $C_K$ gesendet werden, aber mit dem neuen Schlüssel verschlüsselt sind. In Fig. 14 hat die erste so gesendete Dateneinheit die Dateneinheits-Nummer 29. Die RLC-Schicht der Seite T erkennt das Ende der Synchronisations-Phase im Downlink daran, dass die Dateneinheits-Nummer der Dateneinheit, die mit dem auf 0 gesetzten speziellen Bit $C_K$ empfangen wurde, größer oder gleich dem gespeicherten Wert $SN_{F-DL}$(T) ist.

Nach dem Ende der Synchronisations-Phase im Downlink sendet die RLC-Schicht der Seite F alle Dateneinheiten verschlüsselt mit dem neuen Schlüssel und mit dem auf Null gesetzten speziellen Bit $C_K$. Die RLC-Schicht der Seite T empfängt dann nur noch mit dem neuen Schlüssel verschlüsselte Dateneinheiten.

Regel 5:

Die RLC-Schicht der Seite T erkennt das Ende der Synchronisations-Phase im Uplink daran, dass alle Dateneinheiten UL-old oder UL-new entweder quittiert worden sind oder die Maximalzahl von Übertragungswiederholungen für diese Dateneinheiten erreicht wurde. Das Ende der Synchronisations-Phase im Uplink wird der RRC-Schicht der Seite T durch die Meldung END-CKCS-T mitgeteilt.

Das Ende der Synchronisations-Phase im Uplink wird der Seite F dadurch angezeigt, dass eine Dateneinheit UL-new-new mit dem auf Null gesetzten speziellen Bit $C_K$ gesendet wird, aber mit dem neuen Schlüssel verschlüsselt ist. In Fig. 14 hat die erste so gesendete Dateneinheit die Dateneinheits-Nummer 55. Die RLC-Schicht der Seite F erkennt das Ende der Synchronisations-Phase im Uplink daran, dass die Dateneinheits-Nummer der Dateneinheit, welche mit dem auf Null gesetzten speziellen Bit $C_K$ empfangen wurde, größer oder gleich dem gespeicherten Wert $SN_{F-UL}(F)$ ist. Das Ende der Synchronisations-Phase im Uplink wird der RRC-Schicht der Seite F durch die Meldung END-CKCS-F mitgeteilt, damit überhaupt wieder eine neue Prozedur CKCS gestartet werden kann.

Nach dem Ende der Synchronisations-Phase im Uplink sendet die RLC-Schicht der Seite T alle Dateneinheiten verschlüsselt mit dem neuen Schlüssel und mit dem auf Null gesetzten speziellen Bit $C_K$. Die RLC-Schicht der Seite F empfängt dann nur noch mit dem neuen Schlüssel verschlüsselte Dateneinheiten.

Durch Verwendung des speziellen Bits $C_K$ wird erreicht, dass die Prozedur CKCS keine Unterbrechung der Übertragung verursacht. Ohne die Verwendung der gespeicherten Werte $SN_{F-DL}(T)$, $SN_{F-DL}(F)$, $SN_{F-UL}(F)$ und $SN_{F-UL}(T)$ ist die Beendigung der Prozedur CKCS nicht fehlerfrei möglich.

**Patentansprüche**

1. Drahtloses Netzwerk mit einer Funknetzwerk-Steuerung und mehreren zugeordneten Terminals, die zur Verschlüsselung bestimmter zu übertragener Daten über Nutz- und Steuerkanäle und die zur Veränderung des für die Verschlüsselung notwendigen jeweiligen Schlüssels zu bestimmten Zeitpunkten vorgesehen sind,
dadurch gekennzeichnet,

 dass die Funknetzwerk-Steuerung zur Sendung eines mit einem alten Schlüssel verschlüsselten Meldung über eine Änderung des Schlüssels an ein Terminal vorgesehen ist und dass das Terminal zur Sendung eines mit einem neuen Schlüssel verschlüsselten Meldung als Bestätigung für den neuen Schlüssel an die Funknetzwerk-Steuerung vorgesehen ist.

2. Drahtloses Netzwerk nach Anspruch 1,
dadurch gekennzeichnet,

 dass die Funknetzwerk-Steuerung zur Sendung eines mit einem alten Schlüssel verschlüsselten Schlüsseländerungsbefehl an ein Terminal vorgesehen ist und
dass das Terminal zur Sendung eines mit einem neuen Schlüssel verschlüsselten Schlüsselbestätigungsbefehls an die Funknetzwerk-Steuerung vorgesehen ist.

3. Drahtloses Netzwerk nach Anspruch 1,
dadurch gekennzeichnet,
dass der von der Funknetzwerk-Steuerung ausgesendete Schlüsseländerungsbefehl einen neuen Schlüssel enthält.

4. Drahtloses Netzwerk nach Anspruch 3,
dadurch gekennzeichnet,
dass die Funknetzwerk-Steuerung zur Sendung eines Übereinstimmungsbefehls an das Terminal vorgesehen ist, wenn der empfangene Schlüssel mit dem gesendeten Schlüssel übereinstimmt.

5. Drahtloses Netzwerk nach Anspruch 4,
dadurch gekennzeichnet,
dass das Terminal zur Verwendung des von der Funknetzwerk-Steuerung empfangenen Schlüssels bei der Verschlüsselung von Daten vorgesehen ist, wenn das Terminal den Übereinstimmungsbefehl oder mit dem neuen Schlüssel verschlüsselte Daten empfängt.

6. Drahtloses Netzwerk nach Anspruch 1,
dadurch gekennzeichnet,
dass die Funknetzwerk-Steuerung zu Beginn der Schlüsseländerung zum Anhalten der Übertragung von Dateneinheiten vorgesehen ist.

7. Drahtloses Netzwerk nach Anspruch 6,
dadurch gekennzeichnet,
dass die Funknetzwerk-Steuerung nach dem Austausch von Meldungen über den Zeitpunkt der Gültigkeit des neuen Schlüssels zur Ermittlung vorgesehen ist, ob auch wenigstens ein Terminal den neuen Schlüssel verwendet, und nach der Überprüfung zum Aufnehmen der Übertragung von Dateneinheiten in Abhängigkeit von dem Überprüfungsergebnis mit dem neuen oder alten Schlüssel vorgesehen ist.

8. Drahtloses Netzwerk nach Anspruch 1,
dadurch gekennzeichnet,
dass die Funknetzwerk-Steuerung und wenigstens ein Terminal zur Speicherung von Dateneinheits-Nummern und zur Kennzeichnung des verwendeten Schlüssels in den Dateneinheiten während einer Synchronisations-Phase vorgesehen sind, die mit der Sendung der ersten mit neuen Schlüssel verschlüsselten Dateneinheit entweder von der Funknetzwerk-Steuerung oder dem Terminal beginnt und mit der wiederholten Sendung der letzten mit alten Schlüssel verschlüsselten Dateneinheit entweder von der Funknetzwerk-Steuerung oder dem Terminal endet.

FIG. 1

FIG. 3

FIG. 2

## FIG. 4

## FIG. 5

FIG. 7

FIG. 8

FIG. 9

FIG. 10

FIG. 11

FIG. 12

FIG. 13

FIG. 14